# EUROPÄISCHE PATENTSCHRIFT

(11) **EP 3 169 160 B1**
(45) Veröffentlichungstag und Bekanntmachung des Hinweises auf die Patenterteilung: **06.06.2018**
(21) Anmeldenummer: 15738059.3
(22) Anmeldetag: 13.07.2015
(51) Int. Cl.: A22C 11/00, A22C 11/12

(54) **VERFAHREN ZUM ABBINDEN VON WÜRSTEN AN EINEM WURSTSTRANG**
METHOD FOR TYING SAUSAGES IN A STRING OF SAUSAGES
PROCÉDÉ POUR LIGATURER DES SAUCISSES SUR UN CORDON DE SAUCISSES

(30) Priorität: 18.07.2014 DE 102014110153
(43) Veröffentlichungstag der Anmeldung: 24.05.2017
(73) Patentinhaber: Inotec GmbH Maschinenentwicklung und Vertrieb, 72770 Reutlingen (DE)
(72) Erfinder: DOMLATIL, Miroslav, 72766 Reutlingen (DE)
(74) Vertreter: Patentanwälte und Rechtsanwalt Weiß, Arat & Partner mbB
(86) Internationale Anmeldenummer: PCT/EP2015/065964
(87) Internationale Veröffentlichungsnummer: WO 2016/008841

(56) Entgegenhaltungen:
- EP-A1- 0 865 732
- EP-A1- 1 477 068
- EP-A1- 1 671 545
- DE-A1- 10 115 200
- DE-C1- 4 425 233
- DE-U1-202005 021 188
- US-A1- 2007 180 793
- "Inotec Hochleistungs-Bindeautomat GIRoMAtIc IG 5 Inotec Automatic High Speed tying Machine GIRoMAtIc IG 5", , 12. Oktober 2009 (2009-10-12), XP055210349, Gefunden im Internet: URL:http://www.victus.hu/dl/giromatic_pros i.pdf [gefunden am 2015-08-31]

## Beschreibung

Die Erfindung betrifft ein Verfahren zum Abbinden von Würsten an einem Wurststrang mit einem Bindfaden, der von einer Fadenrolle kommt, die um den Wurststrang dreht und der ein Gegengewicht zugeordnet ist.

### Stand der Technik

Bei der Herstellung von Würsten an einem Wurststrang wird üblicherweise ein Wurstbrät von einer Füllmaschine über ein Füllrohr in ein einseitig verschlossenes, schlauchförmiges Verpackungshüllenmaterial, in der Regel ein Natur- oder Kunstdarm, abgefüllt und von diesem Wurststrang dann einzelne Würste gebildet. Dies geschieht beispielsweise in sogenannten Clipmaschinen, bei denen entsprechende Metallclipse zwischen die Würste insbesondere an schon vorhandenen Abdrehstellen eingesetzt werden. Derartige Clipmaschinen werden beispielsweise in der DE 20 2005 021 188 U1 oder der DE 10 2005 033 437 A1 beschrieben.

Heute wird dagegen immer mehr das alte traditionelle Abbinden von Würsten mittels eines Bindfadens gefordert. Eine mit Naturbindfaden abgebundene Wurst vereinigt Produktsicherheit und traditionelles Erscheinungsbild. Das abgebundene Produkt mittels Naturbindefaden ist sicher, da kein Metall oder Plastik beim Separieren der Portionen verwendet wird. Der Naturbindfaden verleiht dem Produkt ein handwerklich gefertigtes Aussehen. Das Vorgehen ist aber ähnlich wie bei der Clipmaschine. Parallel zum gefüllten Darm läuft ein Bindfaden mit, der von der Maschine an vorher definierten, produktbezogenen Stellen ein- oder mehrmals um den Darm gewickelt wird. So können Würste mit oder ohne Zwischenabstand abgebunden werden. Dabei können auch Aufhängeschlaufen integriert oder ganze Wurstketten gebildet werden. Eine derartige Abbindemaschine ist beispielsweise in der EP 1 053 683 A1 beschrieben

So abgetrennt und portioniert werden die Würste dann dem nächsten Verarbeitungsschritt, dem Brühen, Trocknen oder Räuchern zugeführt. Diese Form des Portionierens bzw. Abpackens kommt überall dort zum Einsatz, wo entweder kein Metall/Plastik verwendet werden oder einfach ein traditionelles handwerkliches Erscheinungsbild erzielt werden soll. Mit diesem Verfahren kommen nahezu alle Wurstsorten mit allen Natur-, Collagen- oder Kunstdärmen zum Einsatz. Ebenso gibt es mannigfaltige Arten und Sorten von Bindfäden, die bei diesem Verfahren verwendet werden.

Bei den sich auf dem Markt befindlichen Abbindemaschinen (z.B. der INOTEC Hochleistungs-Bindeautomat Giromatic IG5) ist ein Tragring vorgesehen, der sowohl mit einem Käfig, in dem sich eine Fadenrolle befindet, als auch mit einem Gegengewicht belegt ist. Dieser Tragring rotiert um den Wurststrang und schlingt damit den Faden in gewünschter Art und Weise um die Abdrehstelle. Hierdurch können bei leistungsfähigen Maschinen bis zu 200 Würste pro Minute abgebunden werden. Zwischen den Abdrehstellen steht der Tragring still, so dass sich der Faden der Länge der Wurst bzw. des Wurststrangs anlegt.

Bei diesen Belastungen treten extrem hohe Vibrationen auf, welche Kugellager der Rotoren bzw. des Tragrings, auf dem die Bindefadenrolle gelagert ist, beschädigen. Untersuchungen haben ergeben, dass bei diesen Geschwindigkeiten - insbesondere dem schnellen Verbrauch des Bindfadens - aufgrund des schnellen Massewechsels des Bindfadenrotors eine Wucht entsteht, die das Kugellager nachhaltig beschädigt. Auch ein bereits vorgesehenes Gegengewicht, wie es beispielsweise in der EP 1 477 068 A1 als Zentrifugalelement beschrieben wird, kann diese Beschädigung nur hinauszögern, da das Gewicht der Fadenrolle auf der anderen Seite sich verändert. Bekanntermassen entspricht das Gegengewicht etwa dem Gewicht von einem Gehäuse bzw. einer Halterung für die Bindfadenrolle plus der Hälfte vom Gewicht der Bindfadenrolle. Die Bindfadenrolle wiegt etwa 150 g. Das bedeutet, dass der Rotor mit der Bindfadenrolle perfekt ausgewuchtet ist, wenn die Hälfte der Bindfadenrolle verbraucht ist. Eine extreme Vibration tritt auf, wenn die Bindfadenrolle neu oder verbraucht ist.

Eine weitere Abbindemaschine ist beispielsweise aus der DE 25 59 171 C1 bekannt. Diese Maschine ist gekennzeichnet durch eine Öffnung, durch welche der fleischgefüllt Darm hindurchtritt, eine Vorrichtung, die den Darm auf der Strecke, wo die Abbindung vorgesehen ist, zusammendrückt und das in den Darm eingefüllte Fleisch aus diesem Teilstück herausdrückt. Ferner ist eine Spindel oder Spule vorgesehen, auf welche ein Bindfaden aufgewickelt ist. Elemente sind angeordnet, welche die Spule um ein Teilstück des zusammengedrückten Darms herumführen und dabei den Bindfaden in einem geschlossenen Polygon oder einer geschlossenen Kurvenlinie derart anordnen, dass die Spule am Ende ihrer Bewegung unter Knotenbildung hindurchtreten kann. Des weiteren ist eine Vorrichtung zum Festziehen des Bindfadens nach Bildung des Knotens durch Drehung der Spule um ihre eigene Achse vorgesehen.

### Aufgabe

Aufgabe der vorliegenden Erfindung ist es, derartige Lagerschäden zu minimieren, in dem der Verlauf des Abbindens mit dem Bindfaden optimiert wird.

### Lösung der Aufgabe

Zur Lösung der Aufgabe führen die Merkmale des kennzeichnenden Teils von Anspruch 1.

Erfindungswesentlich ist dabei die Erkennung des Zustands der Bindfadenrolle, nämlich wie viel Prozent des Bindfadens verbraucht ist. In der Regel dürfte sich die Anpassung auf die Abnahme des Gewichts der Fadenrolle beziehen. Dies resultiert aus dem Gedanken, dass die Unwucht in der Regel aufgrund der unterschiedlichen Gewichte zustande kommt. Sollte diese Unwucht eine andere Ursache haben, wird vom Erfindungsgedanken ebenfalls umfasst, dass das Gegengewicht dieser anderen Ursache angepasst wird.

Bei einem Ausführungsbeispiel der Erfindung ist daran gedacht, dass eine Lage des Gegengewichts gegenüber der Fadenrolle verändert wird. Ebenso kann natürlich auch eine Lage der Fadenrolle gegenüber dem Gegengewicht verändert werden. Dazu gehört natürlich, dass das Gewicht der Fadenrolle überwacht wird. Dies kann auf verschiedene Art und Weise geschehen. Direkt kann das Gewicht der Fadenrolle bzw. die Veränderung des Gewichtes durch entsprechende Dehnmessstreifen oder Einrichtungen zur Ermittlung des Gewichts durchgeführt werden.

In einem anderen Ausführungsbeispiel der Erfindung wird die Dicke der Fadenrolle überwacht. Diese kann bevorzugt durch eine entsprechende Optik geschehen, die feststellt, wie viel Faden von der Fadenrolle verbraucht wird. Hieraus wird das geänderte Gewicht ausgerechnet und das Gegengewicht korrigiert. Zum Beispiel kann dies mit Lichtstrahlen geschehen, welche den äusseren Umfang der Fadenrolle abtasten. Einem Sender für Licht ist ein entsprechender Empfänger zugeordnet, wodurch eine Lichtschranke gebildet wird. Bevorzugt bilden mehrere Lichtschranken einen Lichtvorhang. Auch hier sind aber andere Möglichkeiten denkbar, zum Beispiel kann die Dicke der Fadenrolle durch mechanische Messeinrichtungen erfasst werden. Diese anderen Möglichkeiten sollen auch von der Erfindung umfasst sein.

In einem anderen Ausführungsbeispiel ist auch daran gedacht, die Länge des von der Fadenrolle abgewickelten Bindfadens zu ermitteln, woraus, bei Kenntnis des Gewichts des Bindfadens, wiederum auf die Veränderung des Gewichts der Fadenrolle geschlossen werden kann.

Eine andere Möglichkeit besteht auch darin, das Gegengewicht ebenfalls als Fadenspeicher auszubilden, von dem beim Rotieren um den Wurststrang die gleiche oder ähnliche Fadenmenge abgewickelt wird. Auch hierdurch kann das Gewicht einigermassen gleich gehalten werden.

Für die Lageveränderung des Gegengewichts bzw. des Trägers oder Käfigs für die Fadenrolle sind viele Möglichkeiten denkbar. Zum einen könnte eine Neigung oder eine Lage entlang einem Tragring verändert werden. In einem bevorzugten Ausführungsbeispiel genügt es, wenn beispielsweise ein blockartiges Gegengewicht um seine Achse gedreht wird, so dass eine Massenverlagerung im Gegensatz zur Drehachse stattfindet. Hier sind viele Möglichkeiten denkbar, die von der vorliegenden Erfindung umfasst sein sollen.

Denkbar ist auch eine Veränderung eines Werkstoffs des Gegengewichts. Es gibt beispielsweise Werkstoffe oder Werkstoffzusammensetzungen, deren Bestandteile sich bei Rotation verlagern. Beispielsweise könnte ein Werkstoff gewählt werden, dessen schwerere innere Bestandteile sich bei Rotation nach aussen verlagern und so ein grösseres Gewicht bilden. Auch hier ist vieles denkbar.

Durch die vorliegende Erfindung wird gewährleistet, dass der Ablauf des Abbindens von Würsten mit einem Faden so optimiert wird, dass es so gut wie keine Vibrationen gibt. Damit wird die Möglichkeit eröffnet, eine Leistung auch von über 200 Portionen pro Minute erreichen zu können.

Bevorzugt sollen der Maschinensteuerung ferner Daten über die Fadenrolle zugeführt werden, anhand deren ein Abwickeln des Bindfadens gesteuert wird. Hierzu gehören vor allem Angaben bzw. Daten über die Fadenrolle selbst und insbesondere über die Fadenqualität. Nach diesen Angaben, aber auch bevorzugt nach Angaben über den Fadenverbrauch kann zum Beispiel die Art der Beschleunigung des Drehens der Fadenrolle um den Wurststrang geändert werden. Geändert werden könnte auch eine Anfangsposition der Fadenrolle beim Starten oder Abbremsen des Drehens.

Ein weiterer Gedanke betrifft die Identifizierung von Fadenrollen. Verständlicherweise ist einem Maschinenhersteller daran gelegen, dass auf seiner Maschine auch geeignetes Material verarbeitet wird, im vorliegenden Fall geeignete Bindfäden. Damit die Maschine sauber und störungsfrei läuft, müssen diese Bindfäden eine bestimmte Qualität aufweisen, vor allem in Bezug auf Elastizität, Reissfestigkeit und dgl.. Zum Beispiel gibt es einen Faden für Salami mit mehr Klebeeffekt (mehr Avivage) und einen Faden für Knacker (weniger Avivage). Weiterhin gibt es Unterschiede, wie der Faden abgewickelt wird. Meistens geschieht dies von innen nach aussen, aber auch die Steigung bzw. die Art der Wicklung ist wichtig. Je nach Fadenqualität wird die Ansteuerung der Maschine angepasst. Aus diesem Grunde ist es wichtig, die Fadenqualität zu erkennen und dem Produkt zuzuordnen. Ausserdem gibt es Produkte, die nur mit der richtigen Fadenqualität sauber abgebunden werden können.

Es ist daran gedacht, dass der Bindfadenrolle selbst eine entsprechende Einrichtung zugeordnet wird, welche Informationen über die Fadenrolle beinhaltet. Hierzu gehören Länge, Alter, Zusammensetzung, Farbe usw.. Damit kann einer Maschinensteuerung mitgeteilt werden, ob ein geeigneter Bindfaden verarbeitet wird. Natürlich kann damit auch gewährleistet werden, dass der Betreiber einer speziellen Maschine den Bindfaden nur von dem Hersteller oder einem Berechtigten kaufen kann, um ihn auf dieser Maschine zu verwenden. Die gesamte Maschinensteuerung erfolgt in Echtzeit.

Als Speicher kommen vor allem RFID-Karten bzw. -Chips und entsprechende Lesegeräte in Frage. Auch hier soll aber der Erfindungsgedanke darauf nicht beschränkt sein. Ein derartiger codierter Speicher wird jeder Fadenrolle bzw. einer Verpackungseinheit für Fadenrollen (z.B. können dies aus Kostengründen 108 Stück sein, die ein Gewicht von 15-16 kg aufweisen) mitgegeben. Wenn das Abbinden mit einer Bindfadenrolle beginnen soll, muss dieser Speicher mit der Maschine verbunden werden. Ob dies über Draht oder drahtlos erfolgt, ist von untergeordneter Bedeutung. Beides wird vom Erfindungsgedanken umfasst. In der Regel wird ein entsprechendes Lesegerät in oder an der Maschine angeordnet sein. Selbstverständlich können diese entsprechenden Speicher auch Informationen enthalten, mit denen eine Maschine produktbezogen konfiguriert wird.

Dadurch, dass der Faden bzw. insbesondere die Fadenqualität erkannt wird, kann entschieden werden, was weiter passiert:
- für das ausgewählte Produkt falscher Faden
   - Meldung an Kunden
   - Arbeiten nur mit geringerer Leistung
   - Arbeiten nicht möglich
- für das ausgewählte Produkt richtiger Faden
   - Meldung an Kunden
   - Arbeiten mit maximaler Leistung

Bei der Kombination der Fadenqualitätserkennung und der Erkennung des aktuellen Fadenverbrauchs können die Laufeigenschaften des Tragrings optimal angesteuert und die Qualität des Abbindens optimiert werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht eines Ausschnitts aus einer erfindungsgemässen Vorrichtung zum Abbinden von Würsten an einem Wurststrang;
**Figur 2** eine Draufsicht auf einen Käfig mit eingesetzter Fadenrolle;
**Figur 3** einen Querschnitt durch ein Ausführungsbeispiel eines erfindungsgemässen Gegengewicht.

Hier nicht gezeigte Würste an einem Wurststrang werden durch eine Öffnung 1 eines dynamischen Teils 2 einer Verdrängerschwere geführt und ferner durch einen tubusartigen Teil 3 der Verdrängerschere. Durch den dynamischen Teil 2 wird ein mit Wurstbrät gefüllter Darm im Zusammenwirken mit dem statischen Teil 3 an einer bestimmten Stelle eingeschnürt. Wie dies im einzelnen geschieht, spielt für die vorliegende Erfindung nur eine untergeordnete Rolle. Um den Wurststrang dreht ein Tragring 4, der sich über ein nicht näher gezeigtes Lager in einem maschinenfesten Lagergehäuse 5 der erfindungsgemässen Vorrichtung abstützt und der in diesem Lager in Drehrichtung 6 dreht.

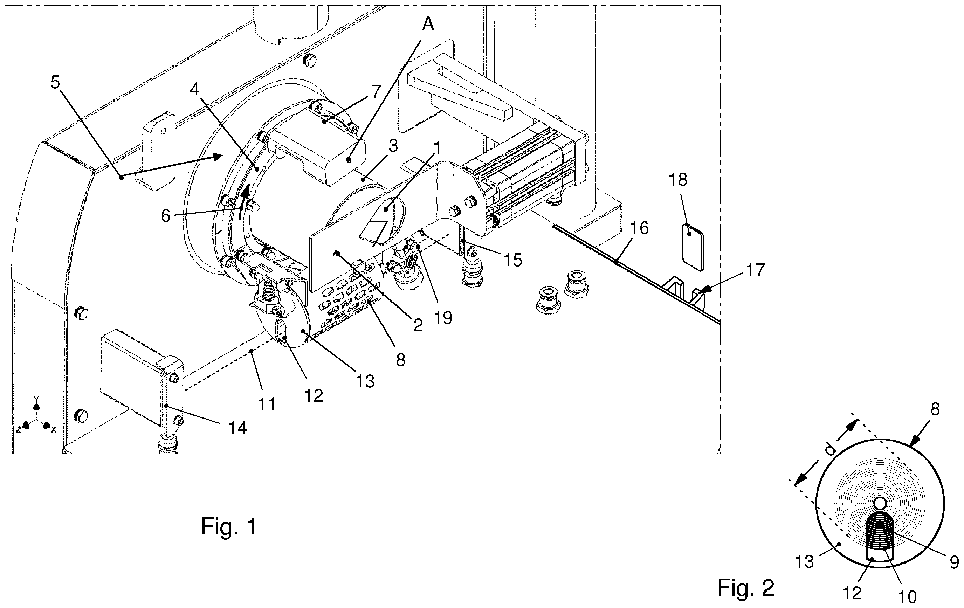

Auf diesem Tragring 4 sitzt ein Gegengewicht 7 auf, welches zusammen mit dem Tragring 4 in Drehrichtung 6 dreht. Ferner befindet sich auf dem Tragring 4 gegenüber dem Gegengewicht 7 ein Käfig 8 zur Aufnahme einer in Figur 2 angedeuteten Fadenrolle 9. Eine äussere Lage 10 der Fadenrolle 9 wird von einem in Figur 1 gestrichelt angedeuteten Lichtstrahl 11 durch eine Öffnung 12 in einem Deckel 13 des Käfigs 8 hindurch beobachtet. Dieser Lichtstrahl 11 kann entweder einer Verminderung eines Dicke d der Fadenrolle 9 folgen, oder aber es sind mehrere Lichtstrahlen 11 als Lichtvorhang vorgesehen, über die eine Abnahme der Dicke d der Fadenrolle ermittelt werden kann.

Zum Aussenden des Lichtstrahls 11 ist ein Lichtsender 14 vorgesehen, zum Empfang der Lichtstrahlen ein Lichtempfänger 15.

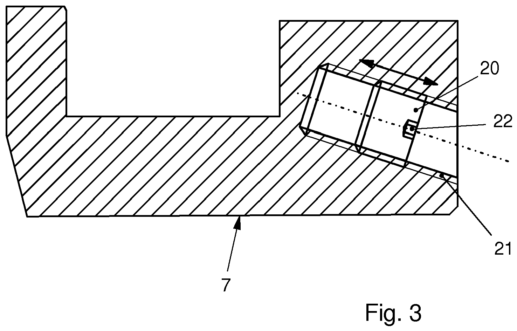

In Figur 3 ist ein Ausführungsbeispiel gezeigt, wie das Gegengewicht 7 verändert werden kann. Hierzu befindet sich in dem Gegengewicht 7 eine Gewindeschraube 20, die in einer Gewindebohrung 21 verdreht wird. Hierzu besitzt die Gewindeschraube 20 eine Inbusbohrung 22, in welche bei Stillstand (zum Beispiel Darmwechsel) ein entsprechendes Werkzeug durch einen kleinen Servomotor eingefahren wird, der die Gewindeschraube 20 verdreht.

Die Funktionsweise der vorliegenden Erfindung ist folgende:
Ein Natur- oder Kunstdarm mit entsprechendem Wurstbrät wird durch die Öffnung 1 des dynamischen Teils 2 und den statischen Teil 3 der Verdrängerschere geführt. Von diesem Strang werden einzelne Würste, durch Verdrängen des Inhalts des Darms mittels der Verdrängerschere erzeugt. Denkbar ist auch, dass die Erzeugung einer Abbindestelle auch auf andere Weise erfolgt. Wichtig ist allein, dass. ein Zwischenabstand zwischen zwei Würsten (Abbindestelle) ohne Füllgut hergestellt. Diese, nicht gezeigte Abbindestelle wird durch Drehen des Tragringes 4 von einem Teil des Fadens umschlungen, wobei dieser Faden von einem Fadenführer 19 geführt wird.

Anfänglich (oder auch später) ist das Gegengewicht 7 auf die Anordnung von Fadenrolle im Käfig gewichtsmässig abgestimmt, so dass der Tragring 4 rund läuft und es zu geringstmöglichen oder keinen Vibrationen kommt. Beim Abwickeln des Bindfadens nimmt allerdings das Gewicht der Fadenrolle 9 ab, so dass ein Ungleichgewicht entsteht. Dieses Ungleichgewicht führt zu erheblichen Vibrationen, die wiederum zu Lagerschäden führen. Um dem entgegenzuwirken, wird das Gegengewicht 7 auf die Veränderung der Fadenrolle 9 abgestimmt. Im vorliegenden Ausführungsbeispiel geschieht dies dadurch, dass die Abnahme der Fadenrolle 9 durch den bzw. die Lichtstrahlen 11 ermittelt wird, die den Aussenumfang der Fadenrolle 9 durch die Öffnung 12 im Deckel 13 des Käfigs 8 abtasten. Erfindungsgemäss wird laufend oder in Stufen das Gegengewicht 7 auf diese Abnahme der Fadenrolle abgestimmt. Beispielsweise kann dies dadurch geschehen, dass die Lage der Gegenrolle 7 an dem Tragring 4 verändert wird. Denkbar ist auch die Verstellung der Neigung des Gegengewichts 7 gegenüber dem Tragring 4 mehr nach aussen oder mehr in Richtung statischen Teil 3 der Verdrängerschere hin. Eine andere Möglichkeit wäre das Verdrehen des Gegengewichts 7 um seine Achse A, wodurch die Fliehkraft verändert wird.

Des Weiteren ist an einer weiteren Seitenwand 16 der erfindungsgemässen Vorrichtung ein Kartenleser 17 angedeutet, der einen entsprechenden Speicher 18 lesen kann. Bevorzugt handelt es sich bei dem Speicher 18 um eine RFID-Karte und bei dem Kartenleser um einen RFID-Kartenleser. Auf diesem Speicher 18 sind beliebige Daten für die Fadenrolle 9, vor allem aber auch über die Fadenqualität gespeichert. Zur Fadenqualität gehören Angaben über Gewicht, Länge, Avivage und die Art der Wicklung (Steigung, Lagen usw.) Der Kartenleser 17 steht mit der Maschinensteuerung in Verbindung.

Bevor die erfindungsgemässe Vorrichtung die Tätigkeit des Abbindens aufnimmt, überprüft die Maschinensteuerung die Qualität des Fadens auf der Fadenrolle anhand den Angaben auf dem Speicher 18. Entsprechend diese Angaben nicht den vorgegebenen Merkmalen, wird der Abbindevorgang nicht gestartet oder zumindest ein Alarm ausgegeben.

Beispielsweise ist es auf diese Art und Weise möglich, der Maschinensteuerung anzugeben, welche Länge eines Bindfadens sich auf der entsprechenden Fadenrolle 9 befindet. Wird dann der Fadenrolle 9 eine Einrichtung zugeordnet, über welche die Länge des abgewickelten Bindfadens ermittelt wird, so kann auch über diese Ermittlung das Gewicht der Fadenrolle ermittelt und das Gegengewicht 7 gesteuert werden. Die Maschine wiederum ist so ausgelegt, dass sie nur dann arbeiten kann, wenn ein entsprechender Speicher 18 in den Kartenleser 17 eingelegt wird.

Durch diese Anordnung soll gewährleistet werden, dass entsprechende Fadenrollen nur von dem Maschinenhersteller oder einem von diesem Berechtigten bezogen werden können. Damit wird gewährleistet, dass auch nur Bindfäden eine bestimmte Qualität und mit bestimmten Eigenschaften auf dieser Maschine verarbeitet werden.

### Bezugszeichenliste

| | | | | | |
|---|---|---|---|---|---|
| 1 | Öffnung | 34 | | 67 | |
| 2 | dynamischer Teil | 35 | | 68 | |
| 3 | statischer Teil | 36 | | 69 | |
| 4 | Tragring | 37 | | 70 | |
| 5 | Lagergehäuse | 38 | | 71 | |
| 6 | Drehrichtung | 39 | | 72 | |
| 7 | Gegengewicht | 40 | | 73 | |
| 8 | Käfig | 41 | | 74 | |
| 9 | Fadenrolle | 42 | | 75 | |
| 10 | Äussere Lage | 43 | | 76 | |
| 11 | Lichtstrahl | 44 | | 77 | |
| 12 | Öffnung | 45 | | 78 | |
| 13 | Deckel | 46 | | 79 | |
| 14 | Lichtsender | 47 | | | |
| 15 | Lichtempfänger | 48 | | | |
| 16 | Seitenwand | 49 | | | |
| 17 | Kartenleser | 50 | | | |
| 18 | Speicher | 51 | | | |
| 19 | Fadenführer | 52 | | | |
| 20 | Gewindeschraube | 53 | | | |
| 21 | Gewindebohrung | 54 | | | |
| 22 | Inbusbohrung | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Abbinden von Würsten an einem Wurststrang mit einem Bindfaden, der von einer Fadenrolle (9) kommt, die um den Wurststrang dreht und der ein Gegengewicht (7) zugeordnet ist,
**dadurch gekennzeichnet,**
**dass** Gegengewicht (7) und Fadenrolle (9) beim Abwickeln des Bindfadens einander angepasst werden.

2. Verfahren nach Anspruch 1, **dadurch gekennzeichnet, dass** eine Lage des Gegengewichts (7) gegenüber der Fadenrolle (9) verändert wird.

3. Verfahren nach Anspruch 1 oder 2, **dadurch gekennzeichnet, dass** eine Lage der Fadenrolle (9) gegenüber dem Gegengewicht (7) verändert wird.

4. Verfahren nach wenigstens einem der vorhergehenden Ansprüche, **dadurch gekennzeichnet, dass** das Gewicht des Gegengewichts (7) entsprechend einer Abnahme des Gewichts der Fadenrolle (9) verändert wird.

5. Verfahren nach wenigstens einem der vorhergehenden Ansprüche, **dadurch gekennzeichnet, dass** ein Gewicht und/oder eine Dicke (d) der Fadenrolle (9) überwacht wird.

6. Verfahren nach wenigstens einem der vorhergehenden Ansprüche, **dadurch gekennzeichnet, dass** die Fadenrolle (9) bzw. deren Dicke (d) von einem Lichtstrahl (11) abgetastet wird.

7. Verfahren nach wenigstens einem der vorhergehenden Ansprüche, **dadurch gekennzeichnet, dass** die Länge des von der Fadenrolle (9) abgewickelten Bindfaden ermittelt wird.

8. Verfahren nach wenigstens einem der vorhergehenden Ansprüche, **dadurch gekennzeichnet, dass** der Maschinensteuerung Daten über die Fadenrolle (9) zugeführt werden, anhand deren ein Abwickeln des Bindfadens gesteuert wird.

9. Vorrichtung zum Abbinden von Würsten an einem Wurststrang mit einem Bindfaden, der von einer Fadenrolle (9) kommt, die sich um den Wurststrang dreht und der ein Gegengewicht (7) zugeordnet ist, **dadurch gekennzeichnet, dass** Gegengewicht (7) einer Abnahme der Fadenrolle (9) beim Abwickeln des Bindfadens anpassbar ist.

10. Vorrichtung nach Anspruch 9, **dadurch gekennzeichnet, dass** Fadenrolle (9) und Gegengewicht (7) an einem um den Wurststrang rotierenden Tragring (4) angeordnet sind und dieser auf einem Lager abgestützt ist.

11. Vorrichtung nach Anspruch 9 oder 10, **dadurch gekennzeichnet, dass** der Fadenrolle (9) eine Gewichtsüberwachung und/oder eine Dickenüberwachung zugeordnet ist.

12. Vorrichtung nach Anspruch 11, **dadurch gekennzeichnet, dass** der Fadenrolle (9) zumindest eine Lichtquelle (14) und zumindest ein Lichtempfänger (15) zugeordnet ist/sind.

13. Vorrichtung nach wenigstens einem der Ansprüche 9 - 12, **dadurch gekennzeichnet, dass** der Fadenrolle (9) eine Einrichtung zur Ermittlung der Länge des abgewickelten Bindfadens zugeordnet ist.

14. Vorrichtung nach wenigstens einem der Ansprüche 9 - 13, **dadurch gekennzeichnet, dass** die Fadenrolle (9) in einem Käfig (8) angeordnet ist.

15. Vorrichtung nach wenigstens einem der Ansprüche 9 - 14, **dadurch gekennzeichnet, dass** der Fadenrolle (9) ein Speicher (18) zugeordnet ist, auf dem sich Daten betreffend die Fadenrolle (9), vor allem über die Fadenqualität, insbesondere auf das Gewicht, die Länge, die Avivage und die Art der Wicklung befinden, wobei der Speicher (18) mit einer Maschinensteuerung in Verbindung steht, wobei ein Lesegerät (17) für den Speicher (18) vorgesehen ist und wobei der Speicher (18) eine RFID-Karte bzw. -Chip und/oder das Lesegerät ein RFID- Kartenleser (17) ist.

## Claims

1. A method for tying off sausages on a string of sausages with a tying twine which comes from a twine reel (9) which turns about the string of sausages and with which a counterweight (7) is associated,
**characterised in that**
the counterweight (7) and twine reel (9) are adapted to each other when unreeling the tying twine.

2. A method according to Claim 1, **characterised in that** a position of the counterweight (7) relative to the twine reel (9) is changed.

3. A method according to Claim 1 or 2, **characterised in that** a position of the twine reel (9) relative to the counterweight (7) is changed.

4. A method according to at least one of the preceding claims, **characterised in that** the weight of the counterweight (7) is changed in accordance with a decrease in the weight of the twine reel (9).

5. A method according to at least one of the preceding claims, **characterised in that** a weight and/or a thickness (d) of the twine reel (9) is monitored.

6. A method according to at least one of the preceding claims, **characterised in that** the twine reel (9) or the thickness (d) thereof is scanned by a beam of light (11).

7. A method according to at least one of the preceding claims, **characterised in that** the length of the tying twine unreeled from the twine reel (9) is ascertained.

8. A method according to at least one of the preceding claims, **characterised in that** the machine control system is supplied with data relating to the twine reel (9), with the aid of which data unreeling of the tying twine is controlled.

9. A device for tying off sausages on a string of sausages with a tying twine which comes from a twine reel (9) which turns about the string of sausages and with which a counterweight (7) is associated, **characterised in that** the counterweight (7) is adaptable to a decrease in the twine reel (9) when unreeling the tying twine.

10. A device according to Claim 9, **characterised in that** the twine reel (9) and counterweight (7) are arranged on a carrier ring (4) which rotates about the string of sausages, and said ring is supported on a bearing.

11. A device according to Claim 9 or 10, **characterised in that** weight monitoring and/or thickness monitoring is associated with the twine reel (9).

12. A device according to Claim 11, **characterised in that** at least one light source (14) and at least one photoreceiver (15) is/are associated with the twine reel (9).

13. A device according to at least one of Claims 9 - 12, **characterised in that** a means for ascertaining the length of the unreeled tying twine is associated with the twine reel (9).

14. A device according to at least one of Claims 9 - 13, **characterised in that** the twine reel (9) is arranged in a cage (8).

15. A device according to at least one of Claims 9 - 14, **characterised in that** a memory (18) is associated with the twine reel (9), in which memory is located data relating to the twine reel (9), above all on the twine quality, in particular the weight, length, finish and the type of winding, the memory (18) being connected to a machine control system, with a reader (17) for the memory (18) being provided and the memory (18) being an RFID card or chip and/or the reader being an RFID card reader (17).

## Revendications

1. Procédé pour ligaturer des saucisses sur un cordon de saucisses par un fil de ligature qui vient d'un rouleau de fil (9) qui tourne autour du cordon de saucisses et auquel est associé un contrepoids (7),
**caractérisé par le fait**
**que** le contrepoids (7) et le rouleau de fil (9) sont adaptés l'un à l'autre lors du déroulement du fil de ligature.

2. Procédé selon la revendication 1, **caractérisé par le fait qu'**on modifie une position du contrepoids (7) par rapport au rouleau de fil (9).

3. Procédé selon la revendication 1 ou 2, **caractérisé par le fait qu'**on modifie une position du rouleau de fil (9) par rapport au contrepoids (7).

4. Procédé selon au moins l'une des revendications précédentes, **caractérisé par le fait qu'**on modifie le poids du contrepoids (7) en fonction d'une diminution du poids du rouleau de fil (9).

5. Procédé selon au moins l'une des revendications précédentes, **caractérisé par le fait qu'**on surveille un poids et/ou une épaisseur (d) du rouleau de fil (9).

6. Procédé selon au moins l'une des revendications précédentes, **caractérisé par le fait que** le rouleau de fil (9) ou son épaisseur (d) est balayé par un faisceau de lumière (11).

7. Procédé selon au moins l'une des revendications précédentes, **caractérisé par le fait qu'**on détermine la longueur du fil de ligature déroulé du rouleau de fil (9).

8. Procédé selon au moins l'une des revendications précédentes, **caractérisé par le fait que** vers la commande de la machine sont alimentées des données sur le rouleau de fil (9), à l'aide desquelles est commandé le déroulement du fil de ligature.

9. Dispositif pour ligaturer des saucisses sur un cordon de saucisses par un fil de ligature venant d'un rouleau de fil (9) tournant autour du cordon de saucisses et auquel est associé un contrepoids (7), **caractérisé par le fait que** le contrepoids (7) est adaptable à une diminution du rouleau de fil (9) lors du déroulement du fil de ligature.

10. Dispositif selon la revendication 9, **caractérisé par le fait que** le rouleau de fil (9) et le contrepoids (7) sont disposés sur une bague de support (4) tournant autour du cordon de saucisses et que ce dernier est supporté sur un palier.

11. Dispositif selon la revendication 9 ou 10, **caractérisé par le fait qu'**au rouleau de fil (9) est associé un moyen de surveillance de poids et/ou un moyen de surveillance d'épaisseur.

12. Dispositif selon la revendication 11, **caractérisé par le fait qu'**au rouleau de fil (9) est/sont associé(s) au moins une source de lumière (14) et au moins un récepteur de lumière (15).

13. Dispositif selon au moins l'une des revendications 9 à 12, **caractérisé par le fait qu'**au rouleau de fil (9) est associé un dispositif de détermination de la longueur du fil de ligature déroulé.

14. Dispositif selon au moins l'une des revendications 9 à 13, **caractérisé par le fait que** le rouleau de fil (9) est disposé dans une cage (8).

15. Dispositif selon au moins l'une des revendications 9 à 14, **caractérisé par le fait qu'**au rouleau de fil (9) est associée une mémoire (18) dans laquelle se trouvent des données concernant le rouleau de fil (9), surtout sur la qualité du fil, en particulier sur le poids, la longueur, l'avivage et la nature de l'enroulement, dans lequel la mémoire (18) est en communication avec la commande de la machine, dans lequel est prévu un lecteur (17) pour la mémoire (18), et dans lequel la mémoire (18) est une carte ou puce RFID et/ou le lecteur est un lecteur de carte RFID (17).
